# EUROPEAN PATENT SPECIFICATION

(11) **EP 4 516 941 B1**
(45) Date of publication and mention of the grant of the patent: **16.09.2026**
(21) Application number: 23937745.0
(22) Date of filing: 29.06.2023
(51) Int. Cl.: C22B 3/02, C22B 3/44, C22B 23/00

(54) **LATERITIC NICKEL ORE HYDROMETALLURGY PRECIPITATION SYSTEM**
HYDROMETALLURGISCHES AUSFÄLLUNGSSYSTEM MIT LATERITISCHEM NICKELERZ
SYSTÈME DE PRÉCIPITATION D'HYDROMÉTALLURGIE DE MINERAI DE NICKEL LATÉRITIQUE

(43) Date of publication of application: 05.03.2025
(73) Proprietor: PT QMB New Energy Materials, Jakarta Selatan, Provinsi DKI Jakarta, 12950 (ID); PT ESG New Energy Material, Jakarta Selatan, Provinsi DKI Jakarta 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: XU, Kaihua, Shenzhen, Guangdong 518101 (CN); BRODJONEGORO, Satryo Soemantri, Jakarta 12950 (ID); WANALDI, Rizky, Jakarta 12950 (ID); AJI, Tegar Mukti, Jakarta 12950 (ID); HASIBUAN, Evan Wahyu, Jakarta 12950 (ID); KRISTIYANTO, Evan Wahyu, Jakarta 12950 (ID); MUZAYADAH, Nurul Lailatul, Jakarta 12950 (ID); LIU, Wenze, Jakarta 12950 (ID); SINAGA, Arnaldo Marulitua, Jakarta 12950 (ID)
(74) Representative: Santarelli
(86) International application number: PCT/CN2023/103769
(87) International publication number: WO 2025/000333

(56) References cited:
- CN-A- 107 858 509
- CN-A- 108 060 303
- CN-A- 111 139 354
- CN-U- 203 683 112
- CN-U- 216 063 258
- CN-U- 216 918 726
- CN-U- 217 350 990
- JP-A- 2020 076 130
- JP-A- 2021 116 443
- JP-A- 2021 186 720
- KR-A- 20150 075 259

## Description

### FIELD OF THE DISCLOSURE

The disclosure relates to the technical field of metal smelting, in particular to a precipitation system for hydrometallurgical processing of laterite nickel ore.

### BACKGROUND

The hydrometallurgical processing technology for laterite nickel ore can handle low-grade laterite nickel ore, typically sourced from the limonitic layer and the transitional layer of the laterite nickel ore deposit.

In the hydrometallurgical processing of laterite nickel ore, altering the pH of the solution is often employed to precipitate metal ions in the solution, thereby removing them. The existing precipitation system for hydrometallurgical processing can be referred to in a patent with application number CN201711120629.X, which provided a device for removing iron from iron-containing solution by wet smelting, the device consists of a series of reactors and thickeners connected in sequence. The solution and neutralizing agent (alkali liquor) are mixed uniformly and then fed into the reactor. After passing through the reactor, the mixture flows into the thickener for thickening, resulting in iron-containing precipitate. However, some precipitate is also generated in the reactor, accumulating at the bottom and unable to flow into the next equipment, necessitating frequent manual cleaning.

Therefore, how to avoid the accumulation of sediment at the bottom of the reactor is an urgent technical problem to be solved.

The utility model CN 216918726 U discloses a precipitation device, which relates to a flocculation and sedimentation device utilizing air-lifting, mixing, and stirring for sewage treatment. This device comprises a sedimentation separation tank that includes a mixing reaction zone and a mud collecting zone. Specifically, it employs a discharging assembly involving an air-lift mud discharge pipe connected to a mud suction port located at the bottom of the mud collecting bucket to discharge the accumulated flocculated sludge using an intermittent air supply.

Additionally, CN 203683112 U discloses a mechanically stirred decomposition tank for aluminum hydroxide production. The tank is equipped with a drive system comprising a motor and a transmission system connected to a rotating shaft with stirring blades to mix the sodium aluminate solution. This document also describes a discharge mechanism where a material lifting air pipe is inserted into a discharge pipe to lift and export the slurry from the tank based on the air-lift principle.

### SUMMARY

The purpose of this disclosure is to provide a precipitation system for hydrometallurgical processing of laterite nickel ore to solve the technical problem of how to avoid the accumulation of sediment at the bottom of the reactor in the existing technology.

The above technical problem is solved by the invention defined by appended claim 1, and preferred embodiments are defined in the dependent claims.

Compared with existing technologies, the beneficial effects of this disclosure are: firstly, introducing metal ion solution into the holding chamber through the first inlet pipe, and simultaneously introducing a neutralizing agent into the first inlet pipe via the second inlet pipe. This allows the neutralizing agent to mix with the metal ion solution before they enter the holding chamber together. As the pH increases upon mixing the metal ion solution with the neutralizing agent, metal ions form hydroxides and precipitate. These precipitates accumulate at the bottom of the holding chamber. Air is then introduced into the material lifting pipe through a gas conduit. Bubbles entrained in the solid-liquid mixture within the material lifting pipe reduce the overall density of the contents in the pipe, making it less dense than the contents in the holding chamber. Due to atmospheric pressure, the liquid level in the material lifting pipe rises, ultimately causing the solid-liquid mixture at the bottom of the holding chamber to be exported through the material lifting pipe. This disclosure utilizes the precipitation system for hydrometallurgical processing of laterite nickel ore, the precipitates at the bottom of the holding chamber can be directly exported, eliminating the need for frequent manual cleaning of residuals within the holding chamber and significantly extending the cycle for manual cleaning of the reaction tank.

### BRIEF DESCRIPTION OF THE DRAWINGS

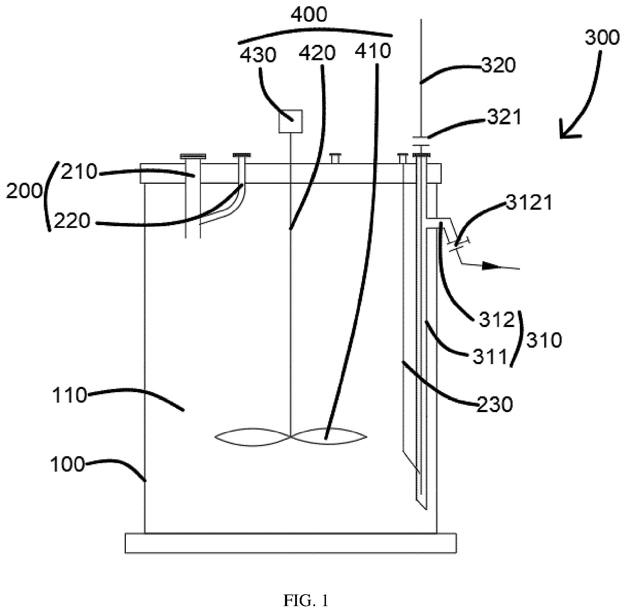

FIG. 1 is a schematic diagram of the structure of the precipitation system for hydrometallurgical processing of laterite nickel ore in this disclosure.

### DETAILED DESCRIPTION OF PREFERRED EMBODIMENTS

In order to make the purpose, technical scheme and advantages of this disclosure clearer, this disclosure is further described in detail in the following part with the attached figures and implementation examples. It should be understood that the specific embodiments described here are only used to explain this disclosure and are not used to limit this disclosure.

Please refer to FIG. 1, this disclosure provides an embodiment of a precipitation system for hydrometallurgical processing of laterite nickel ore, which belongs to the field of metal smelting. This precipitation system utilizes chemical reactions to precipitate metal ions in the solution and export the solid precipitates. By utilizing the aforementioned precipitation system for hydrometallurgical processing of laterite nickel ore, metal precipitates can be exported from the bottom of the reaction vessel, preventing the accumulation of precipitates and thereby extending the cycle for manual cleaning of the reaction vessel.

In some preferred embodiments, the precipitation system for hydrometallurgical processing of laterite nickel ore comprises a reaction tank 100, a feeding assembly 200, and a discharging assembly 300. Specifically, the reaction tank 100 has a holding chamber 110 within it. The feeding assembly 200 comprises a first inlet pipe 210 and a second inlet pipe 220, where the second inlet pipe 220 is connected to the first inlet pipe 210, and the first inlet pipe 210 is connected to the holding chamber 110. The discharging assembly 300 comprises a material lifting pipe 310 and a gas conduit 320. One end of the material lifting pipe 310 is connected to the bottom of the holding chamber 110. The gas conduit 320 extends into the material lifting pipe 310 below the liquid level and supplies gas into the material lifting pipe 310, thereby raising the liquid level inside the material lifting pipe 310 and enabling the substances within the material lifting pipe 310 to be exported from its port.

Firstly, the metal ion solution is introduced into the holding chamber 110 through the first inlet pipe 210, while the neutralizing agent is introduced into the first inlet pipe 210 via the second inlet pipe 220. This allows the neutralizing agent to mix with the metal ion solution before they enter the holding chamber 110 together. As the pH increases upon mixing the metal ion solution with the neutralizing agent, metal ions form hydroxides and precipitate. These precipitates accumulate at the bottom of the holding chamber 110. Air is then introduced into the material lifting pipe 310 through the gas conduit 320. Bubbles entrained in the solid-liquid mixture within the material lifting pipe 310 reduce the overall density of the contents in the pipe, making it less dense than the content in the holding chamber 110. Due to atmospheric pressure, the liquid level in the material lifting pipe 310 rises, ultimately causing the solid-liquid mixture at the bottom of the holding chamber 110 to be exported through the material lifting pipe 310. By utilizing the precipitation system for hydrometallurgical processing of laterite nickel ore provided in this disclosure, the precipitates at the bottom of the holding chamber 110 can be directly exported, eliminating the need for frequent manual cleaning of residuals within the holding chamber 110 and significantly extending the cycle for manual cleaning of the reaction tank 100.

It should be emphasized that the gas conduit 320 should be extended as close as possible to the bottom of the material lifting pipe 310, thus allowing more gas bubbles to be stored within the gas conduit 320 and subsequently increasing the liquid level height in the material lifting pipe 310. In existing equipment, the optimal position for the gas conduit 320 is to extend to a point between 15cm and 22cm from the bottom end of the material lifting pipe 310.

Furthermore, in the existing technology, homogenizing distributors are commonly used to mix neutralizing agents with metal ion solutions. However, this disclosure introduces a high-velocity flow of metal ion solution into the first inlet pipe 210, utilizing the high-speed fluid to promote thorough dispersion of the neutralizing agent within the metal ion solution.

It should be emphasized that the original design intention of this system is to address the hydrometallurgical processing of laterite nickel ore. It can be set up to provide appropriate reaction conditions such as pH, temperature, and pressure, for the reactive precipitation of various metal ions including iron, aluminum, nickel, cobalt, manganese, zinc, and others. In principle, any metal element that can undergo a reaction to form a solid precipitate within the reaction vessel is applicable.

In some preferred embodiments, there are multiple second inlet pipes 220, and these multiple second inlet pipes 220 are sequentially connected to the first inlet pipe 210 along the axial direction of the first inlet pipe 210. By utilizing multiple second inlet pipes 220, the neutralizing agent can be introduced into the metal ion solution in batches. Introducing the neutralizing agent in small, multiple batches allows for more thorough mixing between the metal ion solution and the neutralizing agent.

In some preferred embodiments, the feeding assembly 200 further comprises a third inlet pipe 230, which is connected to the material lifting pipe 310. Through the third inlet pipe 230, additional neutralizing agent can be introduced into the material lifting pipe 310. The neutralizing agent is rapidly mixed with the metal ion solution under the action of the ascending air bubbles in the material lifting pipe 310, causing the metal ions that have not yet precipitated in the material lifting pipe 310 to react and precipitate quickly. Meanwhile, the excess neutralizing agent in the material lifting pipe 310 does not alter the pH of the metal ion solution in the holding chamber 110, thereby not changing the reaction conditions within the holding chamber 110.

Based on the aforementioned embodiments, in some preferred embodiments, the third inlet pipe 230 is connected to the end of the material lifting pipe 310 that is closer to the holding chamber 110. This configuration allows for an extended travel distance of the neutralizing agent introduced through the third inlet pipe 230 within the material lifting pipe 310, thereby prolonging the duration of the metal ion reaction.

In some preferred embodiments, the second inlet pipe 220 partially extends into the first inlet pipe 210. This allows the neutralizing agent introduced through the second inlet pipe 220 to reach the center of the first inlet pipe 210, and subsequently, with the flushing action of the metal ion solution, it can be quickly dispersed throughout the metal ion solution.

In some preferred embodiments, the angle between the flow direction of the material in the first inlet pipe 210 and the flow direction of the material in the second inlet pipe 220 is an acute angle. Due to this acute angle between the flow directions of the materials in the first inlet pipe 210 and the second inlet pipe 220, the kinetic energy loss of the metal ion solution can be minimized as much as possible.

According to the invention, the material lifting pipe 310 comprises a main pipe 311 and an auxiliary pipe 312. The main pipe 311 is vertically installed and extends into the holding chamber 110. One end of the auxiliary pipe 312 is connected to the main pipe 311, and the other end of the auxiliary pipe 312 is inclined downwards. When the gas conduit 320 supplies air into the main pipe 311, the material level inside the main pipe 311 continuously rises until it reaches the juncture of the auxiliary pipe 312 and the main pipe 311, allowing the material to gradually be discharged through the auxiliary pipe 312.

In some preferred embodiments, a stopping valve 3121 is installed on the auxiliary pipe 312 to control the opening and closing of the auxiliary pipe 312. Similarly, a regulating valve 321 is installed on the gas conduit 320 to control the openness of the gas conduit 320. By adjusting the openness of the gas conduit 320 with the regulating valve 321, the flow rate of the gas introduced into the material lifting pipe 310 can be controlled.

In some preferred embodiments, the bottom surface of the reaction tank 100 is designed as an inclined plane that slopes towards the material lifting pipe 310. Under the guidance of this inclined plane, precipitates can be directed to accumulate near the material lifting pipe 310, facilitating the removal of solid precipitates.

In some preferred embodiments, the precipitation system for hydrometallurgical processing of laterite nickel ore further comprises a mixing assembly 400. The mixing assembly 400 comprises blades 410, a rotating shaft 420, and a driving device 430. The rotating shaft 420 is rotatably installed within the holding chamber 110, and the blades 410 are mounted on the rotating shaft 420. The driving device 430 is drivingly connected to the rotating shaft 420 to rotate it. By utilizing the driving device 430 to rotate the rotating shaft 420 and the blades 410, the metal ion solution can be agitated, thereby facilitating the reaction rate of the metal ions. Additionally, the driving device 430 is preferably an electric motor, which is directly connected to the rotating shaft 420 to drive its rotation.

It should be emphasized that both the second inlet pipe 220 and the third inlet pipe 230 are used for introducing neutralizing agents. Operators can, based on process conditions, introduce neutralizing agents of different concentrations or even different types through the second inlet pipe 220 and the third inlet pipe 230, respectively. This allows for a more efficient precipitation of metal ions through reaction.

Firstly, the metal ion solution is introduced into the holding chamber 110 through the first inlet pipe 210, and a neutralizing agent is introduced into the first inlet pipe 210 via the second inlet pipe 220. This allows the neutralizing agent and the metal ion solution to mix together before entering the holding chamber 110. Due to the increase in pH after mixing the metal ion solution and the neutralizing agent, metal ions will form hydroxides and precipitate. The precipitates will accumulate at the bottom of the holding chamber 110. The rotating shaft 420 and blades 410 are driven by the driving device 430 to stir the metal ion solution, facilitating the reaction rate of the metal ions. Air is introduced into the material lifting pipe 310 through the gas conduit 320. The presence of bubbles in the solid-liquid mixture within the material lifting pipe 310 causes the overall density of the material inside the pipe to be less than that of the material in the holding chamber 110. Under the action of atmospheric pressure, the liquid level inside the material lifting pipe 310 rises, ultimately allowing the solid-liquid mixture at the bottom of the holding chamber 110 to be exported through the material lifting pipe 310. By utilizing the precipitation system for hydrometallurgical processing of laterite nickel ore disclosed herein, precipitates at the bottom of the holding chamber 110 can be directly exported, avoiding the need for frequent manual cleaning of residues within the holding chamber 110 and significantly extending the cycle for manual cleaning of the reaction tank 100.

## Claims

1. A precipitation system for hydrometallurgical processing of laterite nickel ore, comprising a reaction tank (100), a feeding assembly (200), and a discharging assembly (300), wherein: the reaction tank (100) has a holding chamber (110) within it; the feeding assembly (200) comprises a first inlet pipe (210) and a second inlet pipe (220), where the second inlet pipe (220) is connected to the first inlet pipe (210), and the first inlet pipe (210) is connected to the holding chamber (110); the discharging assembly (300) comprises a material lifting pipe (310) and a gas conduit (320), one end of the material lifting pipe (310) is connected to the bottom of the holding chamber (110); the gas conduit (320) extends into the material lifting pipe (310) below the liquid level and supplies gas into the material lifting pipe (310), thereby raising the liquid level inside the material lifting pipe (310) and enabling the substances within the material lifting pipe (310) to be exported from its port; **characterized in that** the material lifting pipe (310) comprises a main pipe (311) and an auxiliary pipe (312), the main pipe (311) is vertically installed and extends into the holding chamber (110), one end of the auxiliary pipe (312) is connected to the main pipe (311), and the other end of the auxiliary pipe (312) is inclined downwards.

2. The precipitation system for hydrometallurgical processing of laterite nickel ore according to claim 1, the feeding assembly (200) further comprises a third inlet pipe (230), which is connected to the material lifting pipe (310).

3. The precipitation system for hydrometallurgical processing of laterite nickel ore according to claim 2, the third inlet pipe (230) is connected to the end of the material lifting pipe (310) that is closer to the holding chamber (110).

4. The precipitation system for hydrometallurgical processing of laterite nickel ore according to claim 1, the second inlet pipe (220) partially extends into the first inlet pipe (210).

5. The precipitation system for hydrometallurgical processing of laterite nickel ore according to claim 4, the angle between the flow direction of the material in the first inlet pipe (210) and the flow direction of the material in the second inlet pipe (220) is an acute angle.

6. The precipitation system for hydrometallurgical processing of laterite nickel ore according to claim 1, a stopping valve (3121) is installed on the auxiliary pipe (312) to control the opening and closing of the auxiliary pipe (312).

7. The precipitation system for hydrometallurgical processing of laterite nickel ore according to claim 1, a regulating valve (321) is installed on the gas conduit (320) to control the openness of the gas conduit (320).

8. The precipitation system for hydrometallurgical processing of laterite nickel ore according to claim 1, the precipitation system further comprises a mixing assembly (400), the mixing assembly (400) comprises blades (410), a rotating shaft (420), and a driving device (430), the rotating shaft (420) is rotatably installed within the holding chamber (110), and the blades (410) are mounted on the rotating shaft (420), the driving device (430) is drivingly connected to the rotating shaft (420) to rotate it.

9. The precipitation system for hydrometallurgical processing of laterite nickel ore according to claim 8, the driving component (430) comprises an electric motor, which is directly connected to the rotating shaft (420).

## Patentansprüche

1. Fällungssystem für die hydrometallurgische Verarbeitung von Laterit-Nickelerz, umfassend einen Reaktionstank (100), eine Zuführvorrichtung (200) und eine Entladevorrichtung (300), wobei: der Reaktionstank (100) in seinem Inneren eine Haltekammer (110) aufweist; die Zuführvorrichtung (200) ein erstes Einlassrohr (210) und ein zweites Einlassrohr (220) umfasst, wobei das zweite Einlassrohr (220) mit dem ersten Einlassrohr (210) verbunden ist, und das erste Einlassrohr (210) mit der Haltekammer (110) verbunden ist; die Entladevorrichtung (300) ein Materialförderrohr (310) und eine Gasleitung (320) umfasst, wobei ein Ende des Materialförderrohrs (310) mit dem Boden der Haltekammer (110) verbunden ist; die Gasleitung (320) in das Materialförderrohr (310) unterhalb des Flüssigkeitspegels hineinragt und Gas in das Materialförderrohr (310) einleitet, wodurch der Flüssigkeitspegel im Materialförderrohr (310) angehoben wird und die Stoffe innerhalb des Materialförderrohrs (310) aus dessen Öffnung ausgegeben werden können; **dadurch gekennzeichnet, dass** das Materialförderrohr (310) ein Hauptrohr (311) und ein Hilfsrohr (312) umfasst, das Hauptrohr (311) vertikal installiert ist und in die Haltekammer (110) hineinragt, ein Ende des Hilfsrohrs (312) mit dem Hauptrohr (311) verbunden ist und das andere Ende des Hilfsrohrs (312) nach unten geneigt ist.

2. Fällungssystem für die hydrometallurgische Verarbeitung von Laterit-Nickelerz nach Anspruch 1, wobei die Zuführvorrichtung (200) weiter ein drittes Einlassrohr (230) umfasst, das mit dem Materialförderrohr (310) verbunden ist.

3. Fällungssystem für die hydrometallurgische Verarbeitung von Laterit-Nickelerz nach Anspruch 2, wobei das dritte Einlassrohr (230) mit dem Ende des Materialförderrohrs (310) verbunden ist, das näher an der Haltekammer (110) liegt.

4. Fällungssystem für die hydrometallurgische Verarbeitung von Laterit-Nickelerz nach Anspruch 1, wobei das zweite Einlassrohr (220) teilweise in das erste Einlassrohr (210) hineinragt.

5. Fällungssystem für die hydrometallurgische Verarbeitung von Laterit-Nickelerz nach Anspruch 4, wobei der Winkel zwischen der Fließrichtung des Materials im ersten Einlassrohr (210) und der Fließrichtung des Materials im zweiten Einlassrohr (220) ein spitzer Winkel ist.

6. Fällungssystem für die hydrometallurgische Verarbeitung von Laterit-Nickelerz nach Anspruch 1, wobei ein Absperrventil (3121) an dem Hilfsrohr (312) installiert ist, um das Öffnen und Schließen des Hilfsrohrs (312) zu steuern.

7. Fällungssystem für die hydrometallurgische Verarbeitung von Laterit-Nickelerz nach Anspruch 1, wobei ein Regelventil (321) an der Gasleitung (320) installiert ist, um den Öffnungsgrad der Gasleitung (320) zu steuern.

8. Fällungssystem für die hydrometallurgische Verarbeitung von Laterit-Nickelerz nach Anspruch 1, wobei das Fällungssystem weiter eine Mischvorrichtung (400) umfasst, die Mischvorrichtung (400) Schaufeln (410), eine Rotationswelle (420) und eine Antriebsvorrichtung (430) umfasst, die Rotationswelle (420) drehbar innerhalb der Haltekammer (110) installiert ist, und die Schaufeln (410) an der Rotationswelle (420) montiert sind, wobei die Antriebsvorrichtung (430) in Antriebsverbindung mit der Drehwelle (420) steht, um diese zu drehen.

9. Fällungssystem für die hydrometallurgische Verarbeitung von Laterit-Nickelerz nach Anspruch 8, wobei die Antriebskomponente (430) einen Elektromotor umfasst, der direkt mit der Rotationswelle (420) verbunden ist.

## Revendications

1. Système de précipitation pour le traitement hydrométallurgique de minerai de nickel latéritique, comportant une cuve de réaction (100), un ensemble d'acheminement (200) et un ensemble d'évacuation (300), dans lequel : la cuve de réaction (100) possède une chambre de rétention (110) en son sein ; l'ensemble d'acheminement (200) comporte un premier conduit d'entrée (210) et un deuxième conduit d'entrée (220), le deuxième conduit d'entrée (220) étant raccordé au premier conduit d'entrée (210), et le premier conduit d'entrée (210) étant raccordé à la chambre de rétention (110) ; l'ensemble d'évacuation (300) comporte un conduit de levage de matière (310) et un conduit de gaz (320), une extrémité du conduit de levage de matière (310) est raccordée au bas de la chambre de rétention (110) ; le conduit de gaz (320) s'étend dans le conduit de levage de matière (310) en dessous du niveau de liquide et achemine un gaz dans le conduit de levage de matière (310), ce qui augmente le niveau de liquide à l'intérieur du conduit de levage de matière (310) et permet aux substances au sein du conduit de levage de matière (310) d'être exportées depuis son orifice ; **caractérisé en ce que** le conduit de levage de matière (310) comporte un conduit principal (311) et un conduit auxiliaire (312), le conduit principal (311) est installé verticalement et s'étend dans la chambre de rétention (110), une extrémité du conduit auxiliaire (312) est raccordée au conduit principal (311), et l'autre extrémité du conduit auxiliaire (312) est inclinée vers le bas.

2. Système de précipitation pour le traitement hydrométallurgique de minerai de nickel latéritique selon la revendication 1, l'ensemble d'acheminement (200) comporte en outre un troisième conduit d'entrée (230), qui est raccordé au conduit de levage de matière (310).

3. Système de précipitation pour le traitement hydrométallurgique de minerai de nickel latéritique selon la revendication 2, le troisième conduit d'entrée (230) est raccordé à l'extrémité du conduit de levage de matière (310) qui est plus proche de la chambre de rétention (110).

4. Système de précipitation pour le traitement hydrométallurgique de minerai de nickel latéritique selon la revendication 1, le deuxième conduit d'entrée (220) s'étend partiellement dans le premier conduit d'entrée (210).

5. Système de précipitation pour le traitement hydrométallurgique de minerai de nickel latéritique selon la revendication 4, l'angle entre la direction d'écoulement de la matière dans le premier conduit d'entrée (210) et la direction d'écoulement de la matière dans le deuxième conduit d'entrée (220) est un angle aigu.

6. Système de précipitation pour le traitement hydrométallurgique de minerai de nickel latéritique selon la revendication 1, une vanne d'arrêt (3121) est installée sur le conduit auxiliaire (312) pour commander l'ouverture et la fermeture du conduit auxiliaire (312).

7. Système de précipitation pour le traitement hydrométallurgique de minerai de nickel latéritique selon la revendication 1, une vanne de régulation (321) est installée sur le conduit de gaz (320) pour commander l'ouverture du conduit de gaz (320).

8. Système de précipitation pour le traitement hydrométallurgique de minerai de nickel latéritique selon la revendication 1, le système de précipitation comporte en outre un ensemble de mélange (400), l'ensemble de mélange (400) comporte des pales (410), un arbre rotatif (420), et un dispositif d'entraînement (430), l'arbre rotatif (420) est installé de manière rotative au sein de la chambre de rétention (110), et les pales (410) sont montées sur l'arbre rotatif (420), le dispositif d'entraînement (430) est relié en entraînement à l'arbre rotatif (420) pour le mettre en rotation.

9. Système de précipitation pour le traitement hydrométallurgique de minerai de nickel latéritique selon la revendication 8, le composant d'entraînement (430) comporte un moteur électrique, qui est directement relié à l'arbre rotatif (420).
